# EUROPEAN PATENT SPECIFICATION

(11) **EP 1 942 281 B1**
(45) Date of publication and mention of the grant of the patent: **19.04.2017**
(21) Application number: 06810154.2
(22) Date of filing: 08.09.2006
(51) Int. Cl.: F15B 15/28, F15B 15/14, G01B 7/00

(54) **CYLINDER DEVICE**
ZYLINDERVORRICHTUNG
DISPOSITIF DE CYLINDRE

(30) Priority: 09.09.2005 JP 2005262086
(43) Date of publication of application: 09.07.2008
(73) Proprietor: KYB Corporation, Tokyo 105-6111 (JP); RAILWAY TECHNICAL RESEARCH INSTITUTE, Kokubunji-shi, Tokyo 185-8540 (JP)
(72) Inventor: ITO, Tatsuo, Tokyo 105-6190 (JP); KAMOSHITA, Shogo, Kokubunji-shi Tokyo 185-8540 (JP); KAZATO, Akihito, Kokubunji-shi Tokyo 185-8540 (JP)
(74) Representative: Grünecker Patent- und Rechtsanwälte PartG mbB
(86) International application number: PCT/JP2006/318310
(87) International publication number: WO 2007/029880

(56) References cited:
- FR-A- 1 525 363
- JP-A- 05 256 308
- JP-A- 58 095 202
- JP-A- 58 128 512
- JP-A- 2000 097 206
- JP-A- 2000 097 206
- JP-A- 2002 206 507
- JP-U- 05 087 312
- JP-U- 56 104 605

## Description

This invention relates to the disposition of a displacement sensor in a cylinder device.

### BACKGROUND OF THE INVENTION

JPH11-190308A, published by the Japan Patent Office in 1999, discloses a cylinder device having a displacement sensor that detects relative displacement between a cylinder and a piston rod.

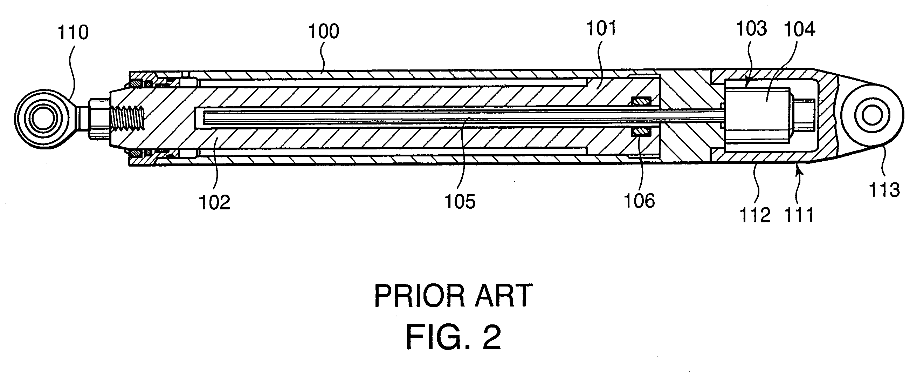

FIG. 2 shows an example of a construction of the cylinder device according to the prior art which is applied to an industrial machine.

Firstly, the cylinder device comprises a cylinder 100, a piston 101 inserted into the cylinder 100 so as to be free to slide, a hollow piston rod 102 joined to the piston 101 so as to project axially from the cylinder 100, and a magnetostrictive displacement sensor 103. The displacement sensor 103 comprises a sensor main body 104 joined to a sensor rod 105, and an annular magnet 106 that forms an external magnetic field facing the outer periphery of the sensor rod 105.

Brackets 110 and 111 having an eye shape or the like are fixed respectively to a projecting end of the piston rod 102 and a base end of the cylinder 100. The cylinder device is attached to the industrial machine via an eye 113 of the brackets 110 and 111.

The sensor main body 104 is accommodated on the inside of a tubular member 112 that is integrated with the bracket 111. The sensor rod 105 projects to the inside of the cylinder 100 from the bracket 111 through a bottom portion of the cylinder 100, and infiltrates a hole portion provided in the piston rod 102 within the cylinder 100. A magnet 106 that faces the outer periphery of the sensor rod 105 is attached to a tip end of the piston rod 102.

### DISCLOSURE OF THE INVENTION

In a typical cylinder device, the length of a maximum contracted state of the cylinder device is preferably made as short as possible relative to a stroke distance of the piston 101. This requirement is particularly important when the cylinder device is applied to an industrial machine in which the installation space for the cylinder device is limited.

However, in the cylinder device of the prior art, the tubular member 112 is interposed between the eye 113 and the bottom portion of the cylinder 100, making it difficult to satisfy this requirement.

Another prior art document is JP 2002 206 507 A.

It is therefore an object of this invention to suppress the overall length of a cylinder device having an in-built displacement sensor relative to an effective stroke length of a piston.

The object t is solved by the subject matter of claim 1.

The details as well as other features and advantages of this invention are set forth in the remainder of the specification and are shown in the accompanying drawings.

### BRIEF DESCRIPTION OF THE DRAWINGS

FIG. 1 is a longitudinal sectional view of a cylinder device according to this invention.
FIG. 2 is a longitudinal sectional view of a cylinder device according to a prior art.

### DESCRIPTION OF THE PREFERRED EMBODIMENT

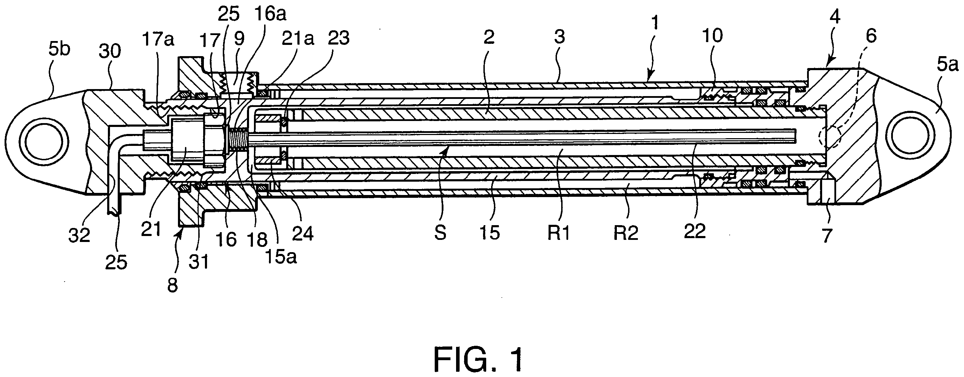

Referring to FIG. 1 of the drawings, a cylinder device comprises a double-tube type cylinder 1 constituted by an inner tube 2 and an outer tube 3, a piston 10 that slides axially through an annular space between the inner tube 2 and outer tube 3, and a hollow piston rod 15 that is joined to a piston 10 so as to project axially outward from the outer tube 3. The piston 10 contacts an outer periphery of the inner tube 2 and an inner periphery of the outer tube 3 while sliding. A tubular head member 8 having a bearing function for guiding the piston rod 15 is fixed to a tip end of the outer tube 3 so as to be free to slide.

A first bracket 4 is fixed to a base end of the cylinder 1. The respective base ends of the inner tube 2 and outer tube 3 are closed by the bracket 4. An eye 5a is formed on the first bracket 4.

A first pressure chamber R1 and a second pressure chamber R2 are delineated on the inside of the cylinder 1. The first pressure chamber R1 and second pressure chamber R2 are respectively filled with a working fluid.

The first pressure chamber R1 is defined by the piston 10, the inner tube 2 and the piston rod 15. In other words, a space constituted by an inside space of the inner tube 2 and a hollow portion 15a of the piston rod 15 corresponds to the first pressure chamber R1.

The second pressure chamber R2 is defined by the piston 10, the outer tube 3 and the piston rod 15. In other words, an annular space positioned between the outer tube 3 and the piston rod 15 and between the piston 1 and the head member 8 corresponds to the second pressure chamber R2.

A space formed between the outer tube 3 and the inner tube 2 and between the piston 10 and the first bracket 4 communicates with the atmosphere via an air hole 7 formed in the first bracket 4.

The first pressure chamber R1 is connected to an external pump via a passage 6 formed in the first bracket 4. The second pressure chamber R2 is connected to an external pump via a passage 9 formed in the head member 8. The cylinder device expands and contracts when these pumps are driven such that working fluid is selectively supplied to the first pressure chamber R1 and second pressure chamber R2.

The hollow portion 15a of the piston rod 15 is closed by a partition wall 16a formed on a projecting end 16 of the piston rod 15. A second bracket 30 formed with an eye 5b is joined to the projecting end 16. For this purpose, a hole portion 17 having a female screw portion 17a is formed in the projecting end 16 in an axially outward orientation. The hole portion 17 is separated from the hollow portion 15a by the partition wall 16a. A hollow male screw portion 31 is formed on the second bracket 30. The second bracket 30 is joined to the projecting end 16 by screwing the male screw portion 31 into the female screw portion 17a.

As shown in the figure, the projecting end 16 is formed so as to come into sliding contact with the head member 8 when the piston rod 15 is in a maximum contracted position.

The cylinder device comprises a magnetostrictive displacement sensor S that detects relative displacement between the cylinder 1 and the piston rod 15.

The displacement sensor S comprises a sensor main body 21, a sensor rod 22 projecting from the sensor main body 21, and an annular magnet 23 that causes an external magnetic field to act on the sensor rod 22.

The sensor main body 21 is accommodated inside the hole portion 17. As noted above, the second bracket 30 is screwed to the inner periphery of the hole portion 17, and hence the sensor main body 21 is accommodated on the inside of the male screw portion 31 of the second bracket 30. The sensor rod 22 is joined to the sensor main body 21 via a screw portion 21a.

A screw hole 18 is formed in the partition wall 16a defining the hollow portion 15a of the piston rod 15 and the hole portion 17, connecting the hollow portion 15a and the hole portion 17. The sensor rod 22 projects into the hollow portion 15a of the piston rod 15 through the screw hole 18, and projects further into the inner tube 2.

When the sensor rod 22 is inserted into the piston rod 15 through the screw hole 18 and a screw portion 21 a formed on the base end thereof is screwed into the screw hole 18, the sensor rod 22 is fixed to the piston rod 15 together with the sensor main body 21. After fixing the sensor main body 21 to the piston rod 15 in this manner, the second bracket 30 is attached to the hole portion 17. The sensor main body 21 comprises a lead wire 25 for supplying operating electricity and outputting electric signals. A through hole 32 for drawing out the lead wire 25 is formed in the second bracket 30. The lead wire 25 is connected to an external power source device and a control device. To ensure waterproofing and dust-proofing, a seal member is preferably provided between the through hole 32 and the lead wire 25.

A tube member 24 is screwed to the tip end inner periphery of the inner tube 2. A magnet 23 is fixed to a position facing the sensor rod 22 on the tip end inner periphery of the inner tube 2 by the tube member 24.

To prevent the working fluid in the first pressure chamber R1 from leaking into the hole portion 17 through the screw hole 18, an annular seal member is sandwiched between the sensor main body 21 and the partition wall 16a.

In this cylinder device, when working fluid is supplied to the first pressure chamber R1 from the external pump via the passage 6, pressure acting on the partition wall 16 leftward in the drawing increases, and as a result, the piston rod 15 displaces in an expansion direction. In accordance with this displacement, the magnet 23 fixed to the inner tube 2 and the sensor rod 22 fixed to the piston rod 15 displace relatively, and a signal corresponding to the displacement is output from the sensor main body 21 via the lead wire 25.

On the other hand, when working fluid is supplied to the second pressure chamber R2 from the external pump via the passage 9, pressure acting on the piston 10 rightward in the drawing increases, and as a result, the piston rod 15 displaces in a contraction direction. In accordance with this displacement, the magnet 23 fixed to the inner tube 2 and the sensor rod 22 fixed to the piston rod 15 displace relatively, and a signal corresponding to the displacement is output from the sensor main body 21 via the lead wire 25.

Hence, in this cylinder device, relative displacement between the piston rod 15 and the cylinder 1 can be detected in a similar manner to the cylinder device of the prior art.

By setting the pressure-receiving surface area of the partition wall 16 when the piston rod 15 is driven to expand and the pressure-receiving surface area of the piston 10 when the piston rod 15 is driven to contract equally, thrust that acts on the piston rod 15 in the expansion direction and contraction direction is accurately proportionate to the pressure balance between the first pressure chamber R1 and the second pressure chamber R2. As a result, in this cylinder device, a similar driving characteristic to that of a so-called double rod cylinder device, in which piston rods project from the piston in both directions and these piston rods are respectively caused to project axially outward from the cylinder, is obtained. In contrast to a double rod cylinder device, however, this cylinder device does not require a large operating space.

In this cylinder device, when the piston rod 15 expands and contracts, the space defined by the piston 10 between the outer tube 3 and inner tube 2 and the bracket 5 enlarges and reduces. As noted above, this space communicates with the atmosphere through the air hole 7, and therefore the enlargement and reduction of the space does not impair the operation of the cylinder device.

A relationship between an effective stroke length of the piston 10 and the overall length of the cylinder device will now be described.

The pressure of the oil chamber R2 acts on the head member 8, and therefore the head member 8 needs to be strong enough to withstand this pressure. Further, the passage 9 is formed in the head member 8. Moreover, the head member 8 functions as a bearing for the piston rod 15 and therefore serves to prevent axial wobbling of the piston rod 15. For these reasons, the head member 8 requires a certain degree of axial length. Correspondingly, the piston rod 15 must be provided with the projecting end 16 that contacts the head member 8 in a maximum contracted state. However, the projecting end 16 is dead space with respect to the stroke distance of the piston 10.

In this cylinder device, the sensor main body 21 is accommodated in the projecting end 16 of the piston rod 15, and therefore, as shown in FIG. 1, the projecting end 16 contacts the head member 8 when the piston rod 15 is in the maximum contracted state. In other words, at least a part of the sensor main body 21 is buried inside the head member 8 when the cylinder device is in the maximum contracted state.

On the other hand, in the cylinder device of the prior art shown in FIG. 2, the sensor main body 104 is accommodated inside the bracket 111, and therefore the sensor main body 104 is always positioned on the outside of the cylinder 100, regardless of the expansion / contraction position of the piston rod 102. Hence, the length of the bracket 111 must be increased by an amount corresponding to the space required to accommodate the sensor main body 104.

Accordingly, when the stroke distance of the piston 10 is set equally to that of the piston 101 in the cylinder device of the prior art, the overall length of this cylinder device in its maximum contracted state is shorter than the overall length of the cylinder device according to the prior art in its maximum contracted state.

In other words, according to this cylinder device, by housing the sensor main body 21 within dead space, the overall length of the cylinder device is reduced relative to the effective stroke length of the piston 10.

In this cylinder device, the passage 6 and air hole 7 are formed in the bracket 4, the passage 9 is formed in the head member 8, and this type of passage is not formed in the inner tube 2 and outer tube 3. This arrangement of the passage 6, air hole 7 and passage 9 is preferable in terms of securing strength in the inner tube 2 and outer tube 3 and ensuring that the piston 10 slides smoothly. Moreover, with this arrangement, the entire length of the outer tube 2 can be used in the stroke of the piston 10.

In this cylinder device, the sensor main body 21, sensor rod 22 and magnet 23 constituting the displacement sensor S are all incorporated into the interior of the cylinder device, and therefore, when the cylinder device is applied to an industrial machine, for example, there is no danger of these members interfering with the constitutional members of the industrial machine.

The contents of Tokugan 2005-262086, with a filing date of November 15, 2005 in Japan, are hereby incorporated by reference.

Although the invention has been described above with reference to certain embodiments of the invention, the invention is not limited to the embodiments described above. Modifications and variations of the embodiments described above will occur to those skilled in the art, within the scope of the claims.

For example, in the embodiment described above, a magnetostrictive sensor is applied to the displacement sensor S, but this invention may also be applied to a cylinder device having a displacement sensor in which a coil is provided in the sensor rod 22 and the displacement of the piston rod 15 is detected on the basis of inductance variation in the coil.

### INDUSTRIAL APPLICABILITY

This invention is capable of suppressing the overall length of a cylinder device having a displacement sensor relative to a stroke distance. Therefore, particularly favorable effects are obtained when this invention is applied to a cylinder device for various types of industrial machines, in which the disposition space for a cylinder device is limited.

The embodiments of this invention in which an exclusive property or privilege is claimed are defined as follows:

## Claims

1. A cylinder device comprising:
a cylinder (1) having an inner tube (2) and an outer tube (3);
a piston (10) having an annular cross-section, which slides axially in an annular space formed between the inner tube (2) and the outer tube (3);
a hollow piston rod (15) that is joined to the piston (10) and projects axially to an outer side of the cylinder (1) through the annular space;
a first pressure chamber (R1) defined by the piston (10), the inner tube (2) and the piston rod (15);
a second pressure chamber (R2) defined by the piston (10), the outer tube (3) and the piston rod (15); and
a displacement sensor (S) that detects a relative displacement between the piston rod (15) and the cylinder (1), the displacement sensor (S) comprising a sensor rod (22) and a sensor main body (21) joined to one end of the sensor rod (22),
**characterized in that**
the sensor main body (21) is accommodated in a projecting end (16) of the piston rod (15), and
the cylinder (10) comprises at one end thereof a head member (8) that functions as a bearing in relation to the piston rod (15), and the projecting end (16) is formed so as to be buried in an inner side of the head member (8) when the piston rod (15) infiltrates the cylinder (10) to a maximum depth.

2. The cylinder device as defined in Claim 1, wherein the sensor rod (22) projects into the first pressure chamber (R1), and the projecting end (16) comprises a hole portion (17) accommodating the sensor main body (21) and a partition wall (16a) separating the accommodating space (17) from the first pressure chamber (R1).

3. The cylinder device as defined in Claim 2, further comprising:
a first bracket (4) having an eye (5a), which is fixed to a base end of the cylinder (1); and
a second bracket (30) having an eye (5b), which is fixed to the projecting end (16).

4. The cylinder device as defined in Claim 3, wherein the second bracket (30) is screwed to an inner periphery of the hole portion (17).

5. The cylinder device as defined in any of Claim 1 and Claim 2 through Claim 4, further comprising a magnet (23) fixed to the inner tube (2), which forms an external magnetic field in relation to the sensor rod (22).

## Patentansprüche

1. Eine Zylindervorrichtung aufweisend:
einen Zylinder (1) mit einem Innenrohr (2) und einem Außenrohr (3),
einen Kolben (10) aufweisend einen ringförmigen Querschnitt, welcher axial in einem ringförmigen Raum zwischen dem Innenrohr (2) und dem Außenrohr (3) gleitet,
eine hohle Kolbenstange (15), die an dem Kolben (10) befestigt ist und axial zu einer Außenseite des Zylinders (1) durch den ringförmigen Raum hervorsteht,
eine erste Druckkammer (R1), die durch den Kolben (10), das Innenrohr (2) und die Kolbenstange (15) definiert ist,
eine zweite Druckkammer (R2), die durch den Kolben (10), das Außenrohr (3) und die Kolbenstange (15) definiert ist, und
einen Verschiebungssensor (S), der eine relative Verschiebung zwischen der Kolbenstange (15) und dem Zylinder (1) detektiert, der Verschiebungssensor (S) weist eine Sensorstange (22) und einen Sensorhauptkörper (21) auf, der mit einem Ende der Sensorstange (22) verbunden ist,
**dadurch gekennzeichnet, dass**
der Sensorhauptkörper (21) in einem hervorstehenden Ende (16) der Kolbenstange (15) untergebracht ist, und
der Zylinder (10) an einem Ende davon ein Kopfglied (8) aufweist, das als ein Lager in Bezug zu der Kolbenstange (15) fungiert, und das hervorstehende Ende (16) ist geformt, um in einer Innenseite des Kopfglieds (8) untergebracht zu sein, wenn die Kolbenstange (15) in den Zylinder (10) mit einer maximalen Tiefe infiltriert.

2. Die Zylindervorrichtung wie in Anspruch 1 definiert, wobei die Sensorstange (22) in die erste Druckkammer (R1) hervorsteht, und das hervorstehende Ende (16) einen Lochabschnitt (17) beinhaltet zum Unterbringen des Sensorhauptkörpers (21) und einer Teilungswand separierend den Unterbringungsraum (17) von der ersten Druckkammer (R1).

3. Die Zylindervorrichtung wie in Anspruch 2 definiert, weiter aufweisend: eine erste Klammer (4) mit einer Öse (5a), die an einem Basisende des Zylinders (1) fixiert ist, und eine zweite Klammer (30) mit einer Öse (5b), die an dem hervorstehenden Ende (16) fixiert ist.

4. Die Zylindervorrichtung wie in Anspruch 3 definiert, wobei die zweite Klammer (30) in eine innere Peripherie des Lochabschnitts (17) geschraubt ist.

5. Die Zylindervorrichtung wie in einem der Ansprüche 1 und 2 bis Anspruch 4 definiert, weiter aufweisend einen Magneten (23), der an dem Innenrohr (2) fixiert ist, welcher ein externes magnetisches Feld in Bezug zu der Sensorstange (22) formt.

## Revendications

1. Dispositif de cylindre comprenant :
un cylindre (1) comprenant un tube intérieur (2) et un tube extérieur (3) ;
un piston (10) ayant une section transversale annulaire, qui coulisse axialement dans un espace annulaire formé entre le tube intérieur (2) et le tube extérieur (3) ;
une tige de piston creuse (15) qui est reliée au piston (10) et fait saillie axialement vers un côté extérieur du cylindre (1) à travers l'espace annulaire;
une première chambre de pression (R1) définie par le piston (10), le tube intérieur (2) et la tige de piston (15) ;
une seconde chambre de pression (R2) définie par le piston (10), le tube extérieur (3) et la tige de piston (15) ; et
un capteur de déplacement (S) qui détecte un déplacement relatif entre la tige de piston (15) et le cylindre (1), le capteur de déplacement (S) comprenant une tige de capteur (22) et un corps principal de capteur (21) relié à une extrémité de la tige de capteur (22),
**caractérisé en ce que**
le corps principal de capteur (21) est logé dans une extrémité saillante (16) de la tige de piston (15), et
le cylindre (10) comprend, à une de ses extrémités, un élément de tête (8) qui a une fonction de support par rapport à la tige de piston (15), et l'extrémité saillante (16) est formée de manière à être insérée dans un côté intérieur de l'élément de tête (8) lorsque la tige de piston (15) pénètre sur une profondeur maximale dans le cylindre (10).

2. Dispositif de cylindre selon la revendication 1, dans lequel la tige de capteur (22) s'avance dans la première chambre de pression (R1) et l'extrémité saillante (-16) comprend une partie formant un trou (17) logeant le corps principal de capteur (21), ainsi qu'une paroi de séparation (16a) séparant l'espace de logement (17) de la première chambre de pression (R1).

3. Dispositif de cylindre selon la revendication 2, comprenant, en outre :
une première patte d'attache (4) pourvue d'un oeil (5a), qui est fixée à une extrémité de base du cylindre (1) ; et
une seconde patte d'attache (30) pourvue d'un oeil (5a), qui est fixée à l'extrémité saillante (16).

4. Dispositif de cylindre selon la revendication 3, dans lequel la seconde patte d'attache (30) est vissée sur une circonférence intérieure de la partie-formant un trou (17).

5. Dispositif de cylindre selon l'une quelconque de la revendication 1 et des revendications 2 à 4, comprenant, en outre, un aimant (23) fixé sur le tube intérieur (2), qui forme un champ magnétique extérieur par rapport à la tige de capteur (22).
